# EUROPÄISCHE PATENTSCHRIFT

(11) **EP 1 930 189 B1**
(45) Veröffentlichungstag und Bekanntmachung des Hinweises auf die Patenterteilung: **03.09.2014**
(21) Anmeldenummer: 08003557.9
(22) Anmeldetag: 22.10.2004
(51) Int. Cl.: B60D 1/06

(54) **Hochlast-Zugöse**
High-strain towing eye
Tête d'attelage de charge élevée

(30) Priorität: 07.11.2003 AT 17932003
(43) Veröffentlichungstag der Anmeldung: 11.06.2008
(62) Teilanmeldung aus: 04789554.5
(73) Patentinhaber: Scharmüller, Josef, 4892 Fornach (AT)
(72) Erfinder: Scharmüller, Josef, 4892 Fornach (AT)
(74) Vertreter: Gibler & Poth Patentanwälte OG

(56) Entgegenhaltungen:
- GB-A- 834 069
- US-A- 2 326 466
- US-A- 5 154 249

## Beschreibung

Die Erfindung betrifft eine Hochlast-Zugöse mit einer randoffenen Kupplungspfanne für die Aufnahme einer gegengleichen Kupplungskugel, einem Kupplungsarm und einem Kupplungsflansch, wobei ein mit der Kupplungspfanne wirkender Niederhalter vorgesehen ist.

Derartige Hochlast-Zugösen werden insbesondere in der Landwirtschaft und bei LKWs eingesetzt und können eine Stützlast von mindestens zwei Tonnen übertragen. Dabei sind die Hochlast-Zugösen massiv ausgebildet und werden mittels eines auf einer Kupplung über einer Kupplungskugel angeordneten Niederhalters auf der Kupplungskugel gehalten.

Die US 2 326 466 A offenbart eine Zugöse für ein Fahrzeug, welche eine randoffene Kupplungspfanne für die Aufnahme einer gegengleichen Kupplungskugel, einen Kupplungsarm und einem Kupplungsflansch aufweist. Weiters ist ein Niederhalter vorgesehen, der mit der Kupplungspfanne zusammenwirkt.

Die GB 834 069 A offenbart eine Kupplung, bei der der Kupplungsarm gegenüber der Kugelpfanne einen Winkel ungleich 90° einschließt.

Die US 5 154 249 A offenbart eine Kupplung mit einer Kupplungskugel und einer Zugöse, wobei der Kupplungsarm im Bereich der Kupplungspfanne mit dieser einen Winkel ungleich 90° einschließt.

Aufgabe der Erfindung ist es, eine Hochlast-Zugöse der eingangs genannten Art derart weiterzubilden, dass eine kompakte Kuppelverbindung mit der Kupplungskugel erzielt werden kann, welche einfach handhabbar ist und bei der eine möglichst große Bodenfreiheit unterhalb der Hochlast-Zugöse erreicht werden kann.

Erfindungsgemäß wird dies dadurch erreicht, dass die Mittelachse der Kupplungspfanne mit der Flächennormalen auf den Kupplungsflansch einen Winkel im Bereich zwischen etwa 50° und etwa 80°, insbesondere im Bereich zwischen 60° und 70°,einschließt.

Dadurch ergibt sich der Vorteil, dass bei der Kupplung Aufbauten für einen Niederhalter und dessen Betätigung entfallen können, wodurch die Baugröße der Kupplung wesentlich verringert werden kann. Dadurch können neben der Kupplung auch andere Vorrichtungen an der Rückseite des Zugfahrzeuges montiert werden, wodurch ein vielseitiger Einsatz der erfindungsgemäßen Hochlast-Zugöse erreicht werden kann. Bei Zugfahrzeugen mit einer Zapfwelle, bei denen die Kupplungskugel unterhalb der Zapfwelle angeordnet ist, kann die Kupplungskugel bei Verwendung der erfindungsgemäßen Hochlast-Zugöse näher an der Zapfwelle montiert werden, wodurch eine möglichst große Bodenfreiheit erzielt wird. Durch das Vorsehen des Winkels kann der beim Ziehen eines Anhängers od. dgl. druckbeaufschlagte Bereich vergrößert werden, wodurch eine höhere Belastbarkeit und Standfestigkeit der erfindungsgemäßen Hochlast-Zugöse erreicht werden kann.

Gemäß einer weiteren Ausgestaltung der Erfindung kann vorgesehen sein, dass der Niederhalter eine halbkreisförmige Gabel aufweist und an der Kupplungspfanne ein der Gabel gegengleicher Kragen angeformt ist. Mittels der Gabel kann ein Teilbereich der Kupplungskugel umfasst und die Kupplungskugel in der Kupplungspfanne gehalten werden, wobei der Niederhalter eine einfache Gestalt aufweist. Mit dem Kragen und der Gabel kann eine besonders sichere Aufnahme der Kupplungskugel durch die Hochlast-Zugöse erreicht werden, wodurch eine hohe Belastbarkeit und Zuverlässigkeit der erfindungsgemäßen Hochlast-Zugöse erreicht werden kann.

In Weiterführung der Erfindung kann vorgesehen sein, dass der Niederhalter - in Gebrauchslage gesehen - an der Unterseite des Kupplungsarmes beweglich gelagert ist, wodurch die durch den Niederhalter bedingte zusätzliche Bauhöhe der Hochlast-Zugöse gering gehalten und eine stabile Führung für den Niederhalter ausgebildet werden kann.

In weiterer Ausbildung der Erfindung kann vorgesehen sein, dass an dem Kragen Ausnehmungen und an der Gabel den Ausnehmungen gegengleiche Fortsätze vorgesehen sind, wodurch eine besonders hohe negative Stützlast, die von der Hochlast-Zugöse aufgenommen werden kann, erreicht wird.

Gemäß einer weiteren Ausführungsform der Erfindung kann der Niederhalter mittels einer Betätigungsvorrichtung betätigbar sein. Mittels der Betätigungsvorrichtung kann eine einfache und zuverlässige Betätigung des Niederhalters sichergestellt werden.

In diesem Zusammenhang kann in Weiterbildung der Erfindung vorgesehen sein, dass die Betätigungsvorrichtung ein Kniehebelgelenk aufweist. Mittels eines Kniehebelgelenkes kann auf den Niederhalter eine große Schließkraft aufgebracht werden, wodurch eine hohe Zuverlässigkeit und Sicherheit der erfindungsgemäßen Hochlast-Zugöse erreicht wird.

Gemäß einer anderen Ausführungsform der Erfindung kann vorgesehen sein, dass die Betätigungsvomichtung einen Exzenterhebel umfasst, wodurch die Anzahl der erforderlichen Teile der Hochlast-Zugöse gering gehalten werden kann. Diese Teile können eine einfache Geometrie aufweisen, wodurch sie einfach und kostengünstig herstellbar sind.

In Weiterführung der Erfindung kann vorgesehen sein, dass die Betätigungsvorrichtung einen Handhebel umfasst. Mittels des Handhebels kann der Kuppelvorgang einfach und schnell durchgeführt werden, wobei keine zusätzlichen Hilfsmittel benötigt werden.

Gemäß wieder einer anderen Ausbildung der Erfindung kann vorgesehen sein, dass die Betätigungsvorrichtung einen pneumatischen und/oder hydraulischen Zylinder umfasst. Insbesondere falls am Anhänger ein pneumatisches und/oder hydraulisches System vorhanden ist, kann die Betätigung des Niederhalters durch diese Ausbildung unter Ausnutzung des pneumatischen und/oder hydraulischen Systems einfach und schnell durchgeführt werden.

Gemäß einer weiteren Ausbildung der Erfindung kann vorgesehen sein, dass die Kupplungspfanne im wesentlichen halbkugelförmig ist und der Niederhalter im Bereich des größten Durchmessers der Kupplungspfanne angeordnet ist. Diese Ausbildung ermöglicht eine zuverlässige und sichere Aufnahme der Kupplungskugel von der erfindungsgemäßen Hochlast-Zugöse.

In weiterer Ausgestaltung der Erfindung kann vorgesehen sein, dass der von der Kupplungspfanne und dem Niederhalter aufnehmbare Teil der Kupplungskugel größer als eine Halbkugel mit dem Durchmesser der Kupplungskugel ist, wobei eine im wesentlichen vollflächige Auflage des aufnehmbaren Teils der Kupplungskugel ausgebildet ist. Dadurch kann eine besonders große Auflagefläche zwischen der Hochlast-Zugöse und der Kupplungskugel erreicht werden, wodurch die auftretenden Spannungen gering gehalten werden und eine hohe Belastbarkeit der erfindungsgemäßen Hochlast-Zugöse erreicht wird. Die Erfindung wird unter Bezugnahme auf die beigeschlossenen Zeichnungen, in welchen Ausführungsformen dargestellt sind, näher beschrieben. Dabei zeigt:
Fig. 1, 3, 5, 7, 9 und 11 jeweils eine Ausführungsform einer Hochlast-Zugöse im Schrägriss bei geöffnetem Niederhalter; und
Fig. 2, 4, 6, 8, 10 und 12 eine Schrägansicht der Hochlast-Zugösen gemäß den Fig. 1, 3, 5, 7, 9 und 11 bei geschlossenem Niederhalter.

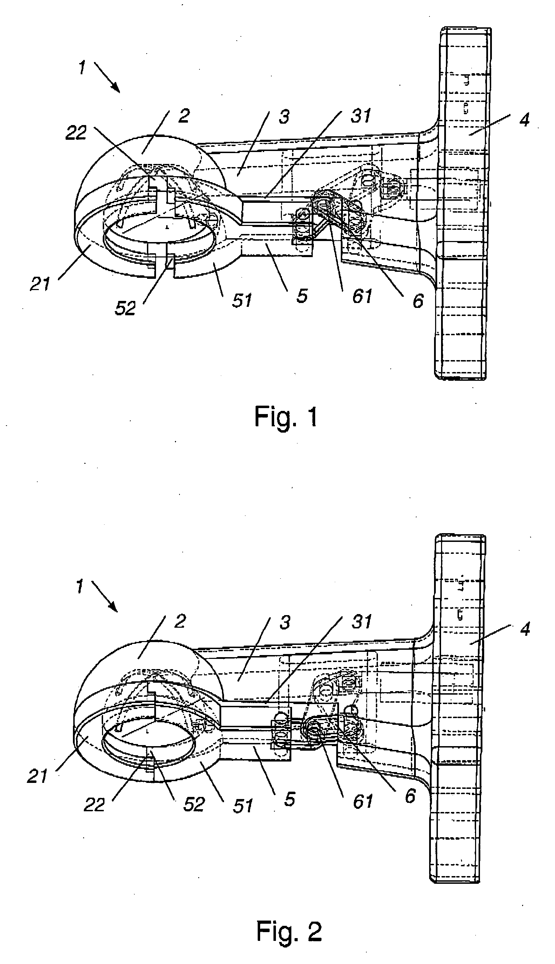

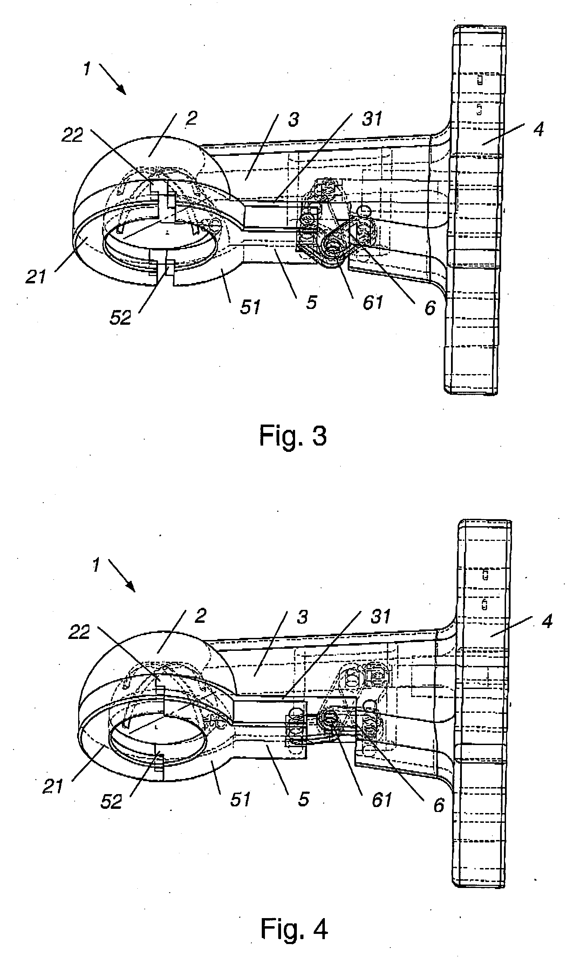

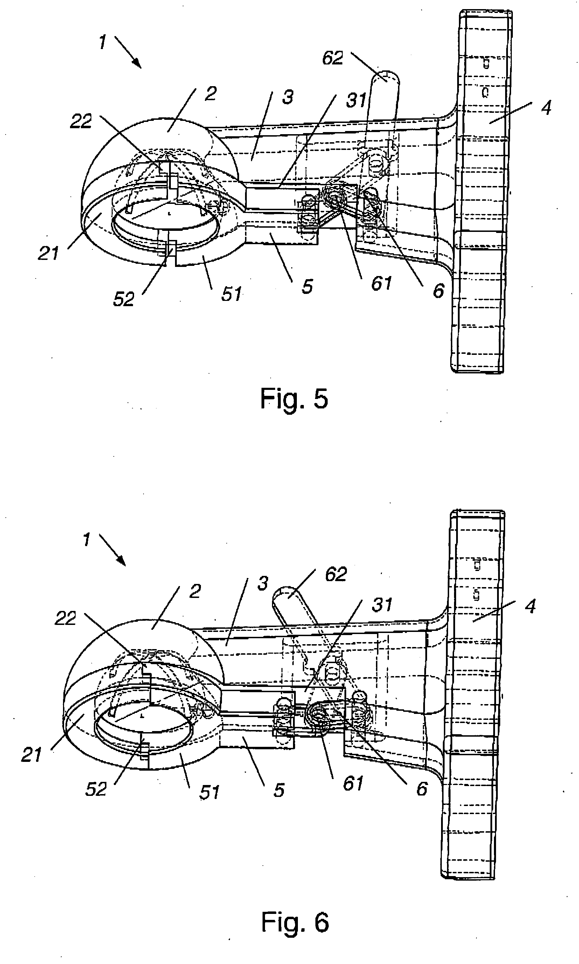

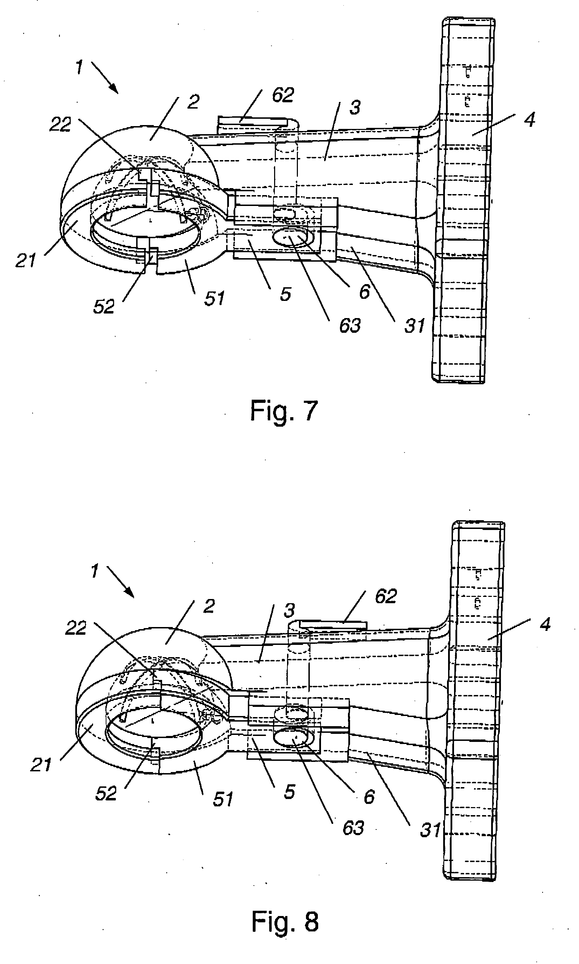

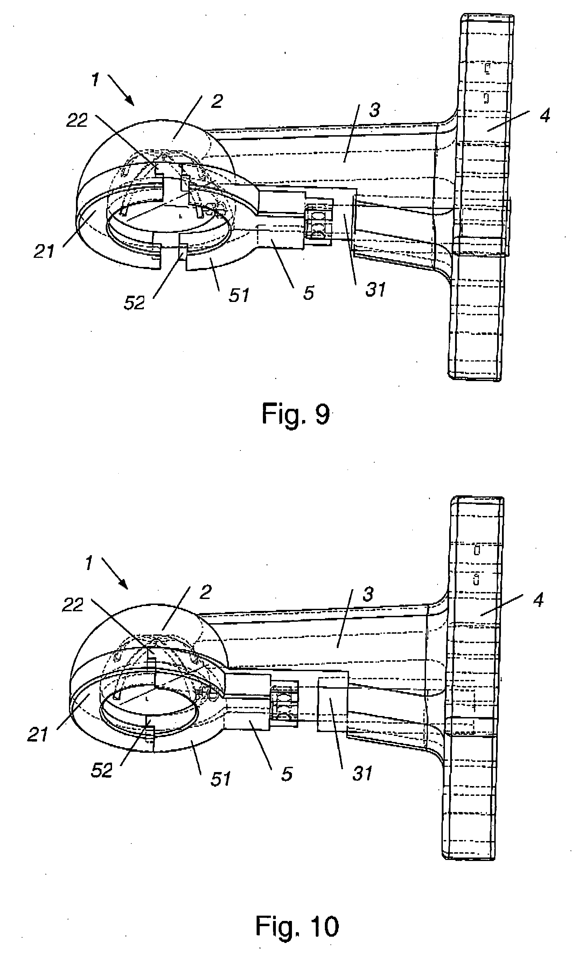

In den Fig. 1 bis 12 sind Ausführungsformen einer Hochlast-Zugöse 1 mit einer randoffenen Kupplungspfanne 2 für die Aufnahme einer gegengleichen Kupplungskugel 7, einem Kupplungsarm 3 und einem Kupplungsflansch 4 dargestellt.

Die Hochlast-Zugöse 1 wird hauptsächlich bei landwirtschaftlichen Maschinen und LKWs verwendet, eignet sich jedoch für jegliche Art Anhänger, bei der große Lasten über die Kupplung übertragen werden. Mit der Hochlast-Zugöse 1 sind Stützlasten von über zwei Tonnen übertragbar. Um die erforderlichen Kräfte übertragen zu können weisen Hochlast-Zugösen 1 den Kupplungsflansch 4 und einen massiven Kupplungsarm 3 auf.

Die Hochlast-Zugöse 1 kann auf eine Kupplungskugel 7 aufgesetzt werden und anschließend mittels eines Niederhalters 5 auf der Kupplungskugel 7 gehalten werden. Dabei weist die erfindungsgemäße Hochlast-Zugöse 1 den Niederhalter 7 auf, der mit der Kupplungspfanne 2 wirkt.

Im Vergleich zu herkömmlichen Kupplungen ist es nicht erforderlich auf der Kupplung oberhalb der Kupplungskugel 7 einen Niederhalter vorzusehen, wodurch die Baugrößer der Kupplung wesentlich verringert werden kann. Mit der Hochlast-Zugöse 1 kann somit gegenüber bekannten Kupplungen eine wesentlich größere Bodenfreiheit erzielt werden. Weiters können die Befestigungsmöglichkeiten an der Rückseite eines Zugfahrzeuges für andere Vorrichtungen flexibler und großzügiger ausgestaltet werden.

Es erscheint günstig, wenn der Niederhalter 5 - in Gebrauchslage gesehen - an der Unterseite 31 des Kupplungsarmes 3 beweglich gelagert ist. Dabei kann insbesondere vorgesehen sein, dass der Niederhalter in einer im wesentlichen parallel zur Längsachse 35 des Kupplungsarmes 3 verlaufenden Führung geführt ist. Dadurch kann die von dem Niederhalter 5 bedingte zusätzliche Bauhöhe der erfindungsgemäßen Hochlast-Zugöse 1 gering gehalten werden.

Der Niederhalter 5 kann mittels einer Betätigungsvonichtung 6 betätigt werden, welche insbesondere im Inneren des Kupplungsarmes 3 angeordnet sein kann, wodurch die Betätigungsvorrichtung 6 gegenüber Umwelteinflüssen, insbesondere einer Verschmutzung, geschützt ist.

Umfasst die Betätigungsvorrichtung 6 ein Kniehebelgelenk 61, so können auf einfache Weise hohe Schließkräfte auf den Niederhalter 5 aufgebracht werden, wodurch ein besonders sicherer Halt der Kupplungskugel 7 erzielt wird.

Die Ausbildung der Betätigungsvorrichtung 6 mit einem Exzenterhebel 63 kann mit wenigen und einfach ausgebildeten Teilen erfolgen, wodurch die Hochlast-Zugöse 1 besonders einfach und kostengünstig herstellbar ist.

Umfasst die Betätigungsvorrichtung 6 einen Handhebel 62, so kann der Kuppelvorgang ohne zusätzliche Hilfsmittel durchgeführt werden, wodurch die Hochlast-Zugöse 1 bei besonders vielen Anwendungen verwendet werden kann.

Sofern ein pneumatisches und/oder hydraulisches System an einem Anhänger vorhanden ist, kann dieses ausgenützt werden, indem die Betätigungsvorrichtung 6 einen pneumatischen und/oder hydraulischen Zylinder umfassend ausgebildet wird.

Bei allen Ausführungen der Betätigungsvorrichtung 6 können Sicherungssysteme vorgesehen sein, welche ein Verschieben des Niederhalters 5 im gekuppelten Zustand wirksam unterbinden.

Der in den Fig. 1 bis 12 dargestellte Niederhalter 5 weist eine halbkreisförmige Gabel 51 auf. An der Kupplungspfanne 2 ist ein der Gabel 51 gegengleicher Kragen 21 angeformt. Mit dem Kragen 21 und der Gabel 51 kann die Kupplungspfanne 2 über den gesamten Umfang der Kupplungskugel 7 weitergeführt werden.

Dabei kann vorgesehen sein, dass der von der Kupplungspfanne 2 und dem Niederhalter 5 aufnehmbare Teil der Kupplungskugel 7 größer als eine Halbkugel mit dem Durchmesser der Kupplungskugel 7 ist, wobei eine im wesentliche vollflächige Auflage des aufnehmbaren Teils der Kupplungskugel 7 ausgebildet ist. Diese Ausbildung gewährleistet, dass die. Hochlast-Zugöse 1 auch gegen Abheben von der Kupplungskugel 7 gesichert ist. Weiters kann ein besonders fester Sitz der Kupplungskugel 7 in der Kupplungspfanne 2 erreicht werden.

Die Kupplungspfanne 2 ist im wesentlichen halbkugelförmig und der Niederhalter 5 im Bereich des größten Durchmessers der Kupplungspfanne 2 angeordnet. Nach Verbringen des Niederhalters 5 kann die Kupplungskugel 7 einfach in die Kupplungspfanne 2 verbracht und/oder aus dieser entfernt werden.

An dem Kragen 21 können Ausnehmungen 22 und an der Gabel 51 gegengleiche Fortsätze 52 vorgesehen sein, die im gekuppelten Zustand die Aufnahme einer hinreichenden negativen Stützlast gewährleisten, wobei die negative Stützlast von dem Kragen 21 und dem Niederhalter 5 gemeinsam aufgenommen wird.

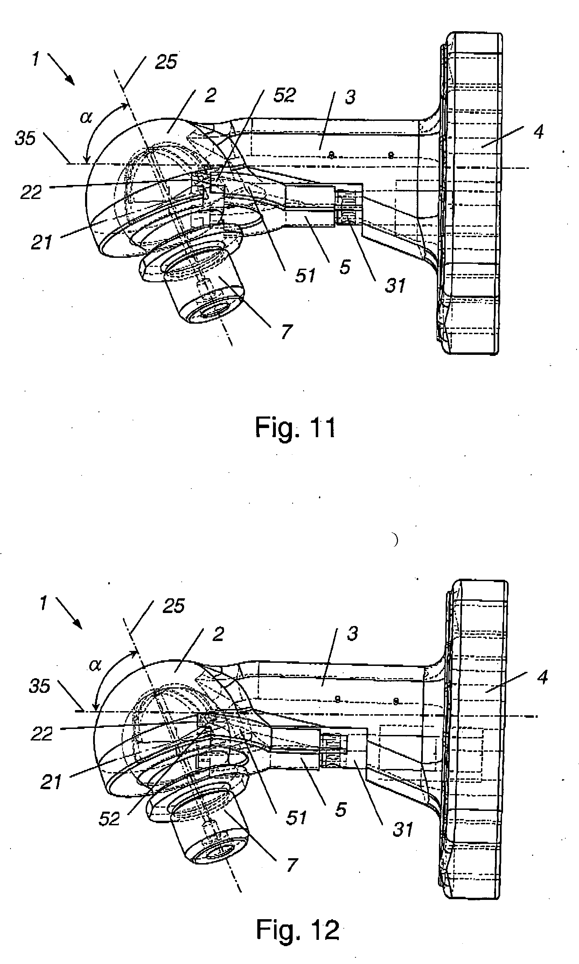

Gemäß der in den Fig. 11 und 12 dargestellten erfindungsgemäßen Ausführungsform weist die Mittelachse 25 der Kupplungspfanne 2 mit der Längsachse 35 des Kupplungsarmes 3 einen von 90° verschiedenen Winkel α, im Bereich zwischer etwa 50° und etwa 80°, insbesondere im Bereich zwischen etwa 60° und 70° liegt.

Bei der Verwendung einer geneigten Kupplungspfanne 2 kann auch die Kupplungskugel 7 geneigt auf der Kupplung montiert sein, wobei die Neigung entsprechend der in den Fig. 11 und 12 gezeigten Kupplungskugel 7 sein kann. Dabei ist die Kupplungskugel in Richtung des Zugfahrzeuges geneigt.

Durch die geneigte Kupplungspfanne 2 kann eine besonders große Auflagefläche mit der Kupplungskugel 7 erreicht werden, wodurch insbesondere eine höhere negative Stützlast aufgenommen werden kann. Weiters weist die geneigte Kupplungspfanne 2 eine vergrößerte druckbeaufschlagte Fläche beim Ziehen des Anhängers auf, wodurch höhere Anhängerlasten gezogen und/oder geringere Flächenpressungen erreicht werden können.

Bei der Hochlast-Zugöse 1 kann das Spiel zwischen der Kupplungskugel 7 und der Kupplungspfanne 2 gering gehalten werden, wodurch Stöße weitgehend vermieden werden eine hohe Laufruhe erreicht wird.

## Patentansprüche

1. Hochlast-Zugöse (1) mit einer randoffenen Kupplungspfanne (2) für die Aufnahme einer gegengleichen Kupplungskugel (7), einem Kupplungsarm (3) und einem Kupplungsflansch (4), wobei ein mit der Kupplungspfanne (2) wirkender Niederhalter (5) vorgesehen ist **dadurch gekennzeichnet, dass** die Mittelachse (25) der Kupplungspfanne (2) mit der Flächennormalen auf den Kupplungsflansch (4) einen Winkel (α) im Bereich zwischen etwa 50° und etwa 80°, insbesondere im Bereich zwischen 60° und 70°, einschließt.

2. Hochlast-Zugöse (1) nach Anspruch 1, **dadurch gekennzeichnet, dass** der Niederhalter (5) eine halbkreisförmige Gabel (51) aufweist und an der Kupplungspfanne (2) ein der Gabel (51) gegengleicher Kragen (21) angeformt ist.

3. Hochlast-Zugöse (1) nach Anspruch 1 oder 2, **dadurch gekennzeichnet, dass** der Niederhalter (5) - in Gebrauchslage gesehen - an der Unterseite (31) des Kupplungsarmes (3) beweglich gelagert ist.

4. Hochlast-Zugöse (1) nach Anspruch 2 oder 3, **dadurch gekennzeichnet, dass** an dem Kragen (21) Ausnehmungen (22) und an der Gabel (51) den Ausnehmungen (22) gegengleiche Fortsätze (52) vorgesehen sind.

5. Hochlast-Zugöse (1) nach einem der Ansprüche 1 bis 4, **dadurch gekennzeichnet, dass** der Niederhalter (5) mittels einer Betätigungsvorrichtung (6) betätigbar ist.

6. Hochlast-Zugöse (1) nach Anspruch 5, **dadurch gekennzeichnet, dass** die Betätigungsvorrichtung (6) ein Kniehebelgelenk (61) aufweist.

7. Hochlast-Zugöse (1) nach Anspruch 5, **dadurch gekennzeichnet, dass** die Betätigungsvorrichtung (6) einen Exzenterhebel (63) umfasst.

8. Hochlast-Zugöse (1) nach Anspruch 5, 6 oder 7, **dadurch gekennzeichnet, dass** die Betätigungsvorrichtung (6) einen Handhebel (62) umfasst.

9. Hochlast-Zugöse (1) nach Anspruch 5, **dadurch gekennzeichnet, dass** die Betätigungsvorrichtung (6) einen pneumatischen und/oder hydraulischen Zylinder umfasst.

10. Hochlast-Zugöse (1) nach einem der Ansprüche 1 bis 9, **dadurch gekennzeichnet, dass** die Kupplungspfanne (2) im wesentlichen halbkugelförmig ist und der Niederhalter (5) im Bereich des größten Durchmessers der Kupplungspfanne (2) angeordnet ist.

11. Hochlast-Zugöse (1) nach einem der Ansprüche 1 bis 10 mit einer Kupplungskugel, **dadurch gekennzeichnet dass** der von der Kupplungspfanne (2) und dem Niederhalter (5) aufnehmbare Teil der Kupplungskugel (7) größer als eine Halbkugel mit dem Durchmesser der Kupplungskugel (7) ist, wobei eine im wesentlichen vollflächige Auflage des aufnehmbaren Teils der Kupplungskugel (7) ausgebildet ist.

## Claims

1. A high-strain drawbar eye (1), comprising a peripherally open coupling pan (2) for accommodating a diametrically opposed hitch ball (7), a coupling arm (3) and a coupling flange (4), wherein a holding-down device (5) is provided which cooperates with the coupling pan (2), **characterized in that** the middle axis (25) of the coupling pan (2) encloses an angle (α) in the range of between approximately 50° and approximately 80°, especially in the range of between 60° and 70°, with the surface normal on the coupling flange (4).

2. A high-strain drawbar eye (1) according to claim 1, **characterized in that** the holding-down device (5) comprises a semi-circular fork (51) and a collar (21) which is diametrically opposed to the fork (51) is integrally attached to the coupling pan (2).

3. A high-strain drawbar eye (1) according to claim 1 or 2, **characterized in that** the holding-down device (5) is movably mounted on the bottom side (31) of the coupling arm (3), as seen in the in-use position.

4. A high-strain drawbar eye (1) according to claim 2 or 3, **characterized in that** recesses (22) are provided on the collar (21) and protrusions (52) which are diametrically opposed to the recesses (22) are provided on the fork (51).

5. A high-strain drawbar eye (1) according to one of the claims 1 to 4, **characterized in that** the holding-down device (5) can be actuated by means of an actuation apparatus (6).

6. A high-strain drawbar eye (1) according to claim 5, **characterized in that** the actuation apparatus (6) comprises a toggle joint (61).

7. A high-strain drawbar eye (1) according to claim 5, **characterized in that** the actuation apparatus (6) comprises an eccentric lever (63).

8. A high-strain drawbar eye (1) according to claim 5, 6 or 7, **characterized in that** the actuation apparatus (6) comprises a hand lever (62).

9. A high-strain drawbar eye (1) according to claim 5, **characterized in that** the actuation apparatus (6) comprises a pneumatic and/or hydraulic cylinder.

10. A high-strain drawbar eye (1) according to one of the claims 1 to 9, **characterized in that** the coupling pan (2) is substantially semi-spherical and the holding-down device (5) is arranged in the region of the largest diameter of the coupling pan (2).

11. A high-strain drawbar eye (1) according to one of the claims 1 to 10 with a hitch ball, **characterized in that** the part of the hitch ball (7) that can be accommodated by the coupling pan (2) and the holding-down device (5) is larger than a semi-sphere with the diameter of the hitch ball (7), wherein a substantially full-face support of the receivable part of the hitch ball (7) is formed.

## Revendications

1. OEillet d'attelage pour charges lourdes (1) avec une chape d'attelage (2) à bord ouvert pour recevoir une boule d'attelage (7) symétrique, un timon d'attelage (3) et une bride d'attelage (4), dans lequel est prévu un élément d'appui (5) agissant sur la chape d'attelage (2), **caractérisé en ce que** l'axe médian (25) de la chape d'attelage (2) forme avec la perpendiculaire à la surface de la bride d'attelage (4) un angle (α) compris entre environ 50° et environ 80°, en particulier compris entre 60° et 70°.

2. OEillet d'attelage pour charges lourdes (1) selon la revendication 1, **caractérisé en ce que** l'élément d'appui (5) présente une fourche (51) semi-circulaire et un collet (21) symétrique par rapport à la fourche (51) est formé sur la chape d'attelage (2).

3. OEillet d'attelage pour charges lourdes (1) selon la revendication 1 ou 2, **caractérisé en ce que** l'élément d'appui (5), vu dans la position d'utilisation, est supporté de façon mobile sur la face inférieure (31) du timon d'attelage (3).

4. OEillet d'attelage pour charges lourdes (1) selon la revendication 2 ou 3, **caractérisé en ce que** des évidements (22) sont prévus sur le collet (21) et des saillies (52) symétriques des évidements (22) sur la fourche (51).

5. OEillet d'attelage pour charges lourdes (1) selon l'une des revendications 1 à 4, **caractérisé en ce que** l'élément d'appui (5) peut être actionné au moyen d'un mécanisme d'actionnement (6).

6. OEillet d'attelage pour charges lourdes (1) selon la revendication 5, **caractérisé en ce que** le mécanisme d'actionnement (6) comporte une articulation à genouillère (61).

7. OEillet d'attelage pour charges lourdes(1) selon la revendication 5, **caractérisé en ce que** le mécanisme d'actionnement (6) comprend un levier excentrique (63).

8. OEillet d'attelage pour charges lourdes (1) selon la revendication 5, 6 ou 7, **caractérisé en ce que** le mécanisme d'actionnement (6) comprend un levier à main (62).

9. OEillet d'attelage pour charges lourdes (1) selon la revendication 5, **caractérisé en ce que** le dispositif d'actionnement (6) comprend un vérin pneumatique et/ou hydraulique.

10. OEillet d'attelage pour charges lourdes (1) selon l'une des revendications 1 à 9, **caractérisé en ce que** la chape d'attelage (2) a une forme sensiblement hémisphérique et l'élément d'appui (5) est disposé au niveau du plus grand diamètre de la chape d'attelage (2).

11. OEillet d'attelage pour charges lourdes (1) selon l'une des revendications 1 à 10 avec une boule d'attelage, **caractérisé en ce que** la partie de la boule d'attelage (7) qui peut se loger dans la chape d'attelage (2) et l'élément d'appui (5) est plus grande qu'une demi-sphère ayant le diamètre de la boule d'attelage (7), l'appui réalisable pour la partie de la boule d'attelage (7) qui peut être logée se faisant sensiblement sur toute la surface.
